# EUROPEAN PATENT APPLICATION

(11) **EP 4 795 984 A1**
(43) Date of publication of application: **26.08.2026**
(21) Application number: 26159575.5
(22) Date of filing: 19.02.2026
(51) Int. Cl.: A47J 31/00, A47J 31/42, A47J 31/52, A47J 42/44

(54) **METHOD FOR ADJUSTING THE AMOUNT OF POWDER AND BEVERAGE MACHINE**

(30) Priority: 25.02.2025 CN 202510215250
(71) Applicant: Kalerm Technology (Suzhou) Co., Ltd, Suzhou Jiangsu 215134 (CN)
(72) Inventor: ZHANG, Dong, Suzhou, Jiangsu, 215134 (CN); LIU, Fuke, Suzhou, Jiangsu, 215134 (CN); LI, Cheng, Suzhou, Jiangsu, 215134 (CN)
(74) Representative: Winter, Brandl - Partnerschaft mbB

(57) **Abstract**

The present application discloses a method for adjusting an amount of powder, comprising: acquiring buffer data, wherein the buffer data comprises first data and at least one second data, the first data indicates a current powder amount, the second data indicates a historical powder amount, and the second data and the first data are collected in time sequence; determining weighted deviation data based on the buffer data, respective standard data corresponding to each data within the buffer data, and respective weight values corresponding to each data within the buffer data, wherein the weight value corresponding to the first data is greater than the weight value corresponding to the second data; and correcting a subsequent powder amount based on the weighted deviation data. By collecting historical powder amount and current powder amount data in time sequence, determines weighted deviation data based on standard data and the weight value, and then utilizes the weighted deviation data as the basis for subsequent powder amount adjustments, thereby realizing dynamic calculation and adjustment of the powder amount required for preparing a next cup of beverage, and improving consistency of coffee quality.

## Description

### TECHNICAL FIELD

The present application relates to the field of beverage preparation, and particularly relates to a method for adjusting the amount of powder and a beverage machine.

### BACKGROUND

A machine for automatically preparing beverages. During the process of preparing the beverage, first the machine grinds the added raw material into fine particles through a grinder, then transports the particles to a brewing device, and then adds water at a certain temperature for brewing to obtain the beverage. In the process, the amount of powder particles distributed to the brewing device of the machine must be precisely controlled to obtain the required beverage quality.

In related prior art, the amount of powder particles distributed to the brewing device was determined through various methods. For example, through rotation parameters of the grinder or rotation parameters of a motor driving the grinder to rotate, or through related parameters of the brewing device compressing the powder particles. The methods either required the use of complex sensors and devices cooperating with the sensors, or had many interference factors. Such interference factors include, for example, the raw material itself, the grinder motor, the state of the blade disc, the raw material transport channel, the powder particle transport channel, and the motor and the structural state of the brewing device.

Therefore, the methods for determining the amount of powder particles in the related prior art had many uncertainties. As machine usage time progressed, an accumulated error expanded to a certain range, leading to degraded machine performance and ultimately leading to degraded beverage quality.

### SUMMARY

One object of the present application is to provide a powder amount adjustment method capable of improving beverage quality.

Another object of the present application is to provide a beverage machine capable of improving beverage quality.

One aspect of the present application provides a method for adjusting the amount of powder, including the following steps:
acquiring buffer data, wherein the buffer data includes first data and at least one second data, the first data indicates a current powder amount, the second data indicates a historical powder amount, and the second data and the first data are collected in time sequence;
determining weighted deviation data based on the buffer data, respective standard data corresponding to each data within the buffer data, and respective weight values corresponding to each data within the buffer data, wherein the weight value corresponding to the first data is greater than the weight value corresponding to the second data; and
correcting a subsequent powder amount based on the weighted deviation data.

Compared with the prior art, the method for adjusting the amount of powder provided by the present application collects historical powder amount and current powder amount data in time sequence, determines weighted deviation data based on standard data and the weight value, and then utilizes the weighted deviation data as the basis for subsequent powder amount adjustments, thereby realizing dynamic calculation and adjustment of the powder amount required for preparing a next cup of beverage, enabling the powder amount output to the brewing device next time to be as close as possible to a preset standard powder amount, thereby compensating for powder amount offset caused by factors such as machine wear, high-load operation, or environmental changes, ensuring that the powder amount of each cup of coffee is stable within a predetermined standard range, and improving consistency of coffee quality.

Another aspect of the present application further provides a beverage machine, wherein the beverage machine includes a memory and a processor, the memory is configured to store a computer program capable of running on the processor, and the processor is configured to, when running the computer program, execute the method for adjusting the amount of powder according to the above embodiment.

### BRIEF DESCRIPTION OF THE DRAWINGS

Fig. 1 is a flowchart of a method for adjusting the amount of powder in an embodiment of the present application.
Fig. 2 is a flowchart of an embodiment of the method for adjusting the amount of powder in Fig. 1.
Fig. 3 is a flowchart of another embodiment of the method for adjusting the amount of powder in Fig. 1.
Fig. 4 is a flowchart of yet another embodiment of the method for adjusting the amount of powder in Fig. 1.
Fig. 5 is a schematic diagram of weighted deviation data presenting a normal distribution pattern in the method for adjusting the amount of powder in Fig. 1.
Fig. 6 is a flowchart of still another embodiment of the method for adjusting the amount of powder in Fig. 1.
Fig. 7 is a flowchart of still another embodiment of the method for adjusting the amount of powder in Fig. 1.
Fig. 8 is a flowchart of a working process of a beverage machine adopting the method for adjusting the amount of powder in Fig. 1.

### DETAILED DESCRIPTION

Reference will now be made in detail to embodiments of the present application, one or more examples of which are shown in the accompanying drawings. Each example is provided by way of explanation of the present application and is not a limitation of the present application. In fact, it will be apparent to those skilled in the art that various modifications and variations can be made to the present application without departing from the scope or spirit of the present application. For example, a feature shown or described as part of one embodiment may be used with another embodiment to yield yet another embodiment. Therefore, the present application is intended to cover such modifications and variations that fall within the scope of the appended claims and their equivalents.

The method for adjusting the amount of powder of the present application is applied to a beverage machine. The beverage machine in an embodiment of the present application is described by taking a coffee machine capable of making coffee as an example. The beverage machine includes a brewing device and a grinder. The grinder is configured to grind a beverage raw material into a fine powder. The brewing device receives the ground powder and supplies water at a certain temperature to the brewing device for brewing to obtain the required beverage. And, before brewing, loose powder is uniformly compacted through a physical pressurization to ensure stable water flow penetration and extraction. Therefore, the weight of the powder to be brewed will directly affect the taste of the beverage.

In prior art, in order to control the consistency of powder weight output each time, a parameter interval range of a brewing device operation was adopted to judge the powder amount. When the parameter value falls within the parameter interval range, a powder amount expectation was met without adjustment, and when the parameter value exceeded the parameter interval range, a single adjustment was made. However, the parameter interval had a risk of expansion. When the parameter interval expanded to a certain range, the algorithm would cause control oscillation, leading to degraded beverage machine performance and ultimately degraded beverage quality.

The above method could not follow and observe an overall state of the beverage machine within the parameter interval range, could not monitor an offset trend, and could not provide an early intervention and a correction for a performance offset that had already occurred within the parameter interval.

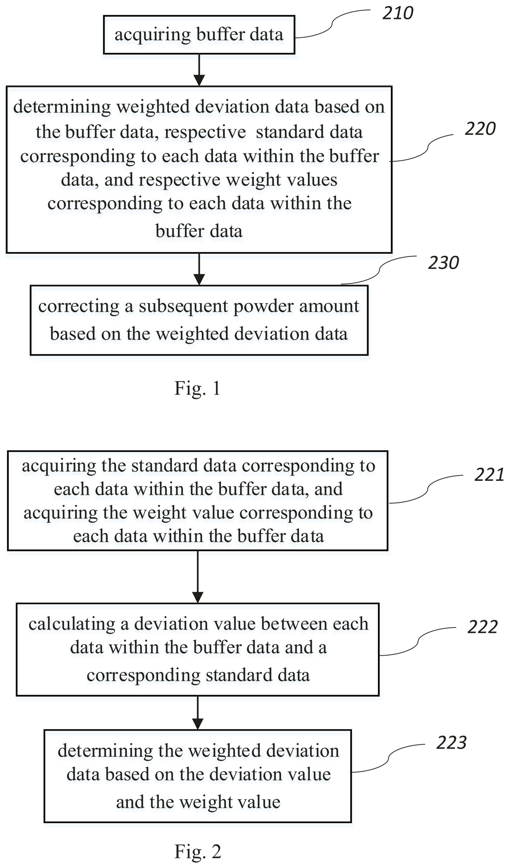

The present application provides a method for adjusting the amount of powder, which can perform a real-time predictive adjustment of the powder amount required for a next cup of output beverage, ensuring that the powder amount of the next cup of beverage is infinitely close to a standard value, thereby improving the quality of the beverage. As shown in Fig. 1, the method for adjusting the amount of powder includes the following steps:
Step 210, acquiring buffer data, wherein the buffer data includes first data and at least one second data, the first data indicates a current powder amount, the second data indicates a historical powder amount, and the second data and the first data are collected in time sequence.

Wherein the buffer data may be data stored in a temporary storage area of a memory, and a buffer is configured to temporarily store data during a data transmission process. The first data and the second data are data related to the powder amount output to the brewing device obtained through a related detection or a calculation. The powder amount value associated with the first data may be corresponded to or calculated through the first data, and the powder amount value associated with the second data may be corresponded to or calculated through the second data.

The method for adjusting the amount of powder further includes: Step 220, determining weighted deviation data based on the buffer data, respective standard data corresponding to each data within the buffer data, and respective weight values corresponding to each data within the buffer data, wherein the weight value corresponding to the first data is greater than the weight value corresponding to the second data.

The buffer data has a clear corresponding relationship with the powder amount. By collecting the second data and the first data in time sequence, and the weight value corresponding to the first data being greater than the weight value corresponding to the second data, ensuring that the latest collected feedback data plays a leading role in an overall deviation calculation, that is, the current powder amount has a greater impact on the weighted deviation data compared to the historical powder amount, and therefore, the current powder amount has a greater impact on a final powder amount adjustment compared to the historical powder amount.

Subsequently, referring to Step 230, correcting a subsequent powder amount based on the weighted deviation data.

The weighted deviation data may serve as a basis for a subsequent powder amount adjustment, enabling the powder amount output to the brewing device next time, i.e., the subsequent time, to be as close as possible to a preset standard powder amount, thereby compensating for powder amount offset caused by factors such as machine wear, high-load operation, or environmental changes, ensuring that the powder amount of each cup of coffee is stable within a predetermined standard range, and improving consistency of coffee quality.

According to the above method for adjusting the amount of powder, the beverage machine may observe a trend when the historical powder amount and the current powder amount deviate relative to the standard powder amount, adjust the subsequent powder amount in real time according to the deviation situation, and ensure that the powder output amount remains unchanged when the performance deviation occurs. And the standard powder amount and the standard data are set in one-to-one correspondence. By combining the current data with the historical data and assigning a higher weight to the current data, dynamic and closed-loop adjustment of the powder amount is realized, ensuring consistency and stability of beverage quality.

In one embodiment, referring to Fig. 2, for Step 220, determining the weighted deviation data based on the buffer data, respective standard data corresponding to each data within the buffer data, and respective weight values corresponding to each data within the buffer data includes:
Step 221, acquiring the respective standard data corresponding to each data within the buffer data, and acquiring the respective weight values corresponding to each data within the buffer data;
Step 222, for each data within the buffer data, calculating a deviation value between said data and a corresponding standard data of said data; and
Step 223, determining the weighted deviation data based on the deviation values and the weight values.

In the embodiment, the respective standard data corresponding to each data within the buffer data is determined according to its corresponding preset powder amount standard (i.e., a standard powder amount). The standard data corresponds to a weight in grams of powder required to make one cup of beverage under ideal conditions. For example, 18 grams of the powder and 24 grams of the powder respectively correspond to different standard data. Meanwhile, according to a data collection time sequence, a corresponding weight value is allocated to each data within the buffer data. And the latest collected first data is assigned a higher weight value. Subsequently, for each data within the buffer data, by calculating the deviation value between said data and its corresponding standard data (the deviation value is a difference value obtained by subtracting the corresponding standard data from the data within the buffer data), and determining the weighted deviation data based on the deviation value and the weight value, an overall powder amount offset situation is accurately reflected, providing a reliable basis for the subsequent powder amount correction and effectively improving the accuracy of powder output adjustment of the beverage machine.

In one embodiment, the buffer data is stored in a first-in-first-out (FIFO) manner, and the number of buffer data is a preset fixed value.

Adopting the first-in-first-out storage manner can ensure that the buffer always stores recent several powder amount data. When the buffer is full, the earliest data will be replaced by the latest data, thereby realizing data update. For example, a first-in-first-out data buffer (FIFO) may be adopted, which stores and reads data in the order of data arrival when storing the data. Fixing the number of buffer data may limit the amount of data participating in calculation, avoiding interference with current adjustment caused by excessive historical data. By managing the buffer data in the first-in-first-out manner, timely data update is ensured, data accumulation is avoided, and real-time performance and efficiency of the algorithm are improved.

In the embodiment, the number of buffer data may be three or more, i.e., the first data and at least two second data, for example, less than ten second data, to facilitate rapid calculation of the weighted deviation data.

Wherein the first data may be currently collected powder amount data, and the second data may be powder amount data collected in the previous two times. By setting such a data number range, calculation accuracy can be ensured while reducing calculation amount and improving processing speed. In practical application, an appropriate number of buffer data may be selected according to the specific requirements of the beverage machine to achieve the best powder amount adjustment effect. In addition, the accuracy and the efficiency of the powder amount adjustment may be further improved by continuously optimizing the algorithm.

In one embodiment, the weighted deviation data is calculated as: $WOFn = {\sum }_{k = 1}^{n} \left(ΔOFk*Wk\right) ;$ where WOFn indicates the weighted deviation data, ΔOFk indicates the deviation value between a kth data within the buffer data and a corresponding standard data, and Wk indicates the weight value corresponding to the kth data within the buffer data.

In the embodiment, the respective standard data corresponding to each data is determined according to a preset powder amount standard, for example, 18 grams of the powder and 24 grams of the powder respectively correspond to different standard data. By multiplying the deviation value of each data with a corresponding weight value and then performing weighted summation, the weighted deviation data WOFn reflecting the overall powder amount deviation situation can be obtained, and the weighted deviation data WOFn provides an accurate and reliable basis for the subsequent powder amount correction. The calculation manner of the weighted deviation is clarified through a simple weighted summation mathematical formula, ensuring transparency and repeatability of the calculation process.

Further, the weight values can be flexibly adjusted according to an actual situation. For example, for the first data closer to the current time, a higher weight value can be assigned to more accurately reflect the recent powder amount change trend. Conversely, for the earlier second data, a lower weight value can be assigned to reduce the impact of the earlier second data on the current powder amount adjustment. The method of adjusting the weight value in time sequence helps improve real-time performance and accuracy of the powder amount adjustment. In the actual operation, the weight values can be continuously optimized according to operating conditions and the historical data of the beverage machine to achieve best powder amount control effect.

In one embodiment, the weight values satisfy the following conditions: the weight values corresponding to each data within the buffer data form an increasing sequence according to a time sequence of data collection, and the sum of the weight value corresponding to the first data and all weight values corresponding to the second data is 1.

In the embodiment, by presetting a weight allocation rule, the weight is assigned to each data in the buffer. For example, when the buffer simultaneously contains the first data (current data) and the second data (historical data), the weight value corresponding to the first data can be set to 0.6, and the weight value corresponding to the second data can be set to 0.4; when there are two second data, the weight value corresponding to the first data can be set to 0.5, and the weight value corresponding to each of the two second data can be set to 0.3 and 0.2 respectively; the above exemplary setting can satisfy the requirement that the sum of the weight value corresponding to the first data and the weight value corresponding to the second data is 1.

The sum of the weight value being 1 is to ensure that the calculated weighted deviation data will not produce additional amplification or reduction due to the setting of the weight value. The weight values corresponding to each data forming the increasing sequence according a time sequence of data collection can more accurately reflect the powder amount offset trend.

And the increasing sequence presented by the weight value can conform to a certain mathematical rule, for example, the weight value is sequentially a1, a2, a3, a4..., according to the data collection in time sequence, where a1+a2=a3, a2+a3=a4, and so on. Thus, the first data occupies the largest proportion, and the second data decreases sequentially according to the pattern, so as to provide better and more reasonable weight allocation.

Of course, the above weight value may be a fixed weight value corresponding to each data in the buffer data, or may be a dynamically adjusted weight value. For example, based on different raw materials, when the raw material used is coffee bean, the weight value may be adjusted according to the type and the state of the coffee bean; or the weight value may be adjusted based on different ambient temperature and humidity; or the weight value may be adjusted according to the working load state of the grinder, etc. And the raw material is ground into powder by the grinder; exemplarily, when the raw material is the coffee bean, the grinder grinds the coffee bean into coffee powder.

The above weight allocation scheme ensures that the latest collected data holds a dominant position in the overall weighted calculation, fully reflects the temporal nature of the data collection, and provides an accurate basis for the subsequent powder amount correction based on the weighted deviation. By setting the weight value in the increasing sequence according to the time sequence of data collection, the change trend of the powder amount can be more accurately reflected, while avoiding excessive influence of the historical data on the subsequent powder amount adjustment.

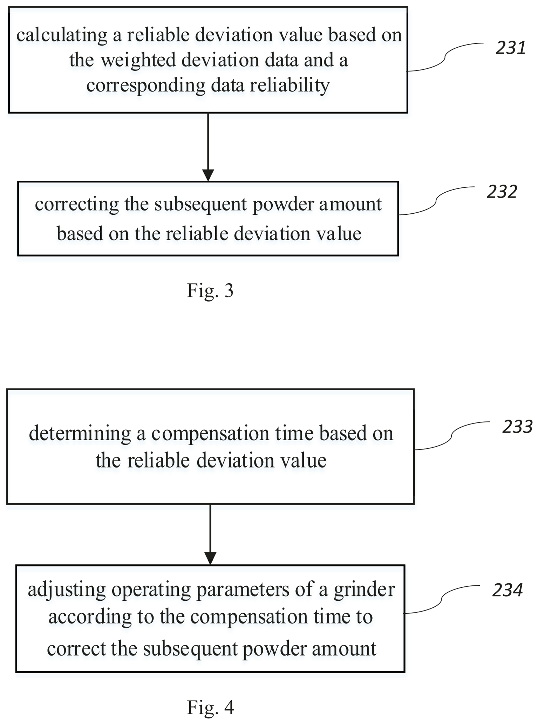

In one embodiment, referring to Fig. 3, Step 230, correcting the subsequent powder amount based on the weighted deviation data, specifically includes:
Step 231, calculating the reliable deviation value based on the weighted deviation data and a corresponding data reliability, wherein the data reliability is determined based on the weighted deviation data presenting a normal distribution pattern; and
Step 232, correcting the subsequent powder amount based on the reliable deviation value.

By introducing the data reliability, the accuracy of the powder amount correction is further optimized to ensure that the powder amount adjustment is more precise. The subsequent powder amount is corrected based on the reliable deviation value, thereby compensating for the powder amount offset caused by machine wear, high-load operation, or environmental changes, enabling the beverage machine to always maintain optimal powder amount output under different working conditions, ensuring stable coffee powder amount, which not only improves the taste consistency of the beverage such as coffee, but also extends the service life of an equipment and reduces maintenance costs.

In one embodiment, referring to Fig. 4, Step 232, correcting the subsequent powder amount based on the reliable deviation value, specifically includes:
Step 233, determining a compensation time based on the reliable deviation value; and
Step 234, adjusting operating parameters of a grinder according to the compensation time to correct the subsequent powder amount, wherein the operating parameters of the grinder include at least one of working duration, output powder amount, and grinding degree.

The adjustment method can effectively compensate for the powder amount offset caused by machine wear, high-load operation, or another environmental factor. According to the finally calculated compensation time, the working duration of the grinder can be directly adjusted, the output powder amount can be adjusted based on the compensation time, and the grinding degree that determines the coarseness and fineness of the powder can be adjusted and determined based on the compensation time, ensuring that the powder amount remains stable, thereby improving the consistency of the beverage quality.

In the embodiment, after the reliable deviation value OFn is obtained through the aforementioned step, the system calculates the compensation time according to the OFn, and the compensation time serves as the adjustment basis for adjusting the working parameter of the grinder, enabling the subsequent powder output amount to approach the preset standard powder amount. For example, if the reliable deviation value is positive, then the compensation time is positive, indicating that the actual powder amount is insufficient, and the grinding time (the grinding time is the grinding working duration of the grinder) needs to be increased to increase the output powder amount of the grinder; conversely, if the reliable deviation value is negative, then the compensation time is negative, indicating that the actual powder amount is excessive, and the grinding time needs to be reduced to decrease the output powder amount of the grinder. Therefore, adjusting the compensation time based on the reliability improves the dependability of the powder amount control.

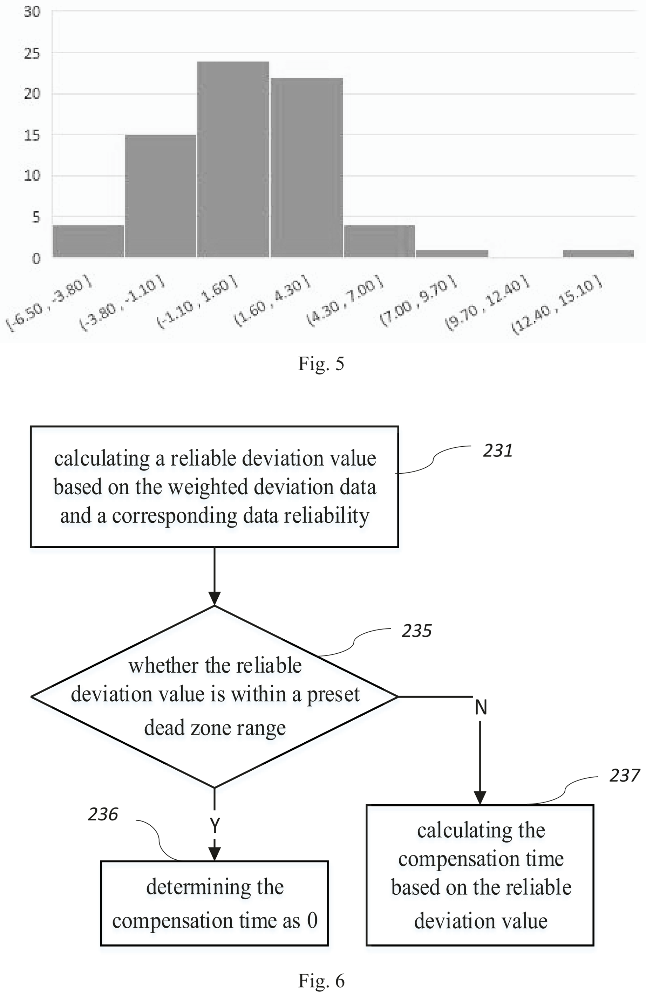

Referring to Fig. 5, in one embodiment, the data reliability is determined based on the weighted deviation data presenting the normal distribution pattern, including: the closer the weighted deviation data is to a mathematical expectation µ of the normal distribution, the higher the corresponding data reliability is, wherein the mathematical expectation µ indicates a center position of the normal distribution.

In the normal distribution, the mathematical expectation µ is the center position of the distribution, and most data will concentrate around the mathematical expectation µ, while the probability of data being far from the mathematical expectation µ appearing is relatively small. Based on such the characteristic of the normal distribution, the data reliability is stipulated to be related to the distance between the weighted deviation data and the mathematical expectation. The closer to the mathematical expectation µ, the more the data is in a "concentrated and typical" area of the distribution, and is relatively more indicative and stable, therefore the data reliability of the data is set higher.

When the weighted deviation data is in the center area of the normal distribution, the data reliability approaches 1; when the weighted deviation data is in the edge area of the normal distribution, the data reliability approaches 0.

Since the system as a whole has an error, the final first data and the second data cannot accurately reflect the powder weight, but fluctuate in an upper and a lower interval of the standard data, and the data fluctuation conforms to the normal distribution pattern. Exemplarily, referring to Fig. 5, a rectangular coordinate system is established, wherein the abscissa is the weighted deviation value WOFn after calculating the weight; the ordinate is a number of samples falling within the corresponding range. The interval range with a larger number of samples has higher reliability; while the interval range with a smaller number of samples has lower reliability.

In the embodiment, by performing statistical analysis on the weighted deviation data WOFn, based on the normal distribution characteristic of the data, the concept of data reliability is introduced, and the normal distribution model of the data reliability is established. After performing the reliability calculation on the weighted deviation value WOFn and then importing the weighted deviation value WOFn to correct the subsequent powder amount, under such control characteristic, when abnormal fluctuation occurs in actual use, an adjustment can also be made, but the intensity of the adjustment will be constrained according to the normal distribution pattern, which can avoid oscillation caused by the abnormal extreme value data fluctuation.

When the weighted deviation data is in the center area of the normal distribution, the corresponding reliability approaches 1, indicating that the data is relatively reliable; while when the weighted deviation data is in the edge area of the normal distribution, the corresponding reliability approaches 0, reflecting that there is a large deviation in the data. By dynamically adjusting the data reliability through the normal distribution pattern, abnormal data can be effectively filtered and stability of the algorithm can be improved.

The center area of the normal distribution indicates a high probability of the data occurrence, therefore the reliability is high; the edge area indicates a low probability of the data occurrence, and there is a high possibility of being an abnormal value, therefore the reliability is low. On this basis, the reliability is used to calculate the reliable deviation value, thereby effectively reducing the influence of the abnormal data on the adjustment in the subsequent powder amount correction process, improving the control accuracy of the entire system for the powder amount fluctuation, and ensuring that the coffee machine powder output amount is stable and consistent with the preset standard.

The embodiment realizes precise control of the beverage machine powder amount adjustment by introducing the concept of data reliability and establishing the normal distribution model. An improvement not only improves the quality and the taste of the beverage, but also enhances the stability and adaptability of the beverage machine, providing strong support for intelligent and automated development of the beverage machine.

In one embodiment, the reliable deviation value is calculated as: $OFn = WOFn * Cn ,$ where OFn indicates the reliable deviation value corresponding to the weighted deviation data, WOFn indicates the weighted deviation data, Cn indicates the data reliability, and Cn is a value between 0 and 1, i.e., Cn is greater than 0 and less than 1.

In the embodiment, the deviation between each data in the buffer and the corresponding standard data is first calculated, and the weight value is allocated according to the time sequence of data collection to obtain the weighted deviation data WOFn, then the data reliability Cn is determined by combining the statistical analysis of the normal distribution characteristic of the WOFn, and finally the WOFn is multiplied by the Cn to obtain the reliable deviation value OFn, and the reliable deviation value OFn serves as the basis for the subsequent powder amount correction, effectively reducing the influence of the abnormal data on the overall adjustment, ensuring that the beverage machine powder output amount approaches the preset standard powder amount, and improving the accuracy and stability of the system control. By introducing the data reliability, the accuracy of the weighted deviation data can be further optimized to ensure more precise powder amount adjustment.

During the implementation, the deviation between each data in the buffer and the standard data is first weighted and summed to obtain the weighted deviation data WOFn, then the reliable deviation value OFn is calculated based on the product of the weighted deviation data WOFn and the corresponding reliability Cn (with the value range of 0 to 1). Subsequently, the subsequent powder amount is corrected based on the reliable deviation value, for example, by adjusting the working parameter of the grinder to make the powder output amount of the next cup of the beverage approach the preset standard powder amount, thereby compensating for the powder amount offset caused by machine wear, high-load operation, or environmental changes, ensuring the stable coffee powder amount, and improving consistency of the coffee quality.

In one embodiment, the compensation time is calculated as: $Tn = OFn / \left(α*e\right) ;$ where Tn indicates the compensation time, OFn indicates the reliable deviation value, α indicates a conversion coefficient for the relationship between the standard data and the powder weight, and e indicates the actual bean grinding efficiency of the grinder.

In the embodiment, the reliable deviation value OFn is adjusted by the weight and the data reliability is first calculated according to the aforementioned step, then using the preset conversion coefficient α, the OFn is divided by the product of the α and the e to obtain the compensation time Tn, which serves as the basis for adjusting the working duration of the grinder when preparing the next cup of beverage, thereby compensating for the powder amount deviation caused by machine wear, high-load operation, or environmental changes, effectively ensuring that the beverage powder amount is always close to the preset standard powder amount, and improving consistency of the beverage quality.

And the conversion coefficient α reflects a quantitative relationship between the standard data and the powder weight. For example, every 100 steps of the grinder operation corresponds to n grams of the powder amount, or one motor load parameter of the grinder corresponds to n grams of the powder amount. The grinder bean grinding efficiency e can be obtained through an actual measurement, for example, the powder weight ground per a unit time, such as grinding 2 grams of the powder amount per a second.

In one embodiment, the actual bean grinding efficiency e is calculated as: $e = E - OFn / \left(α*T\right) ;$ where E indicates a theoretical bean grinding efficiency of the grinder, and T indicates the bean grinding time of the grinder.

By dynamically calculating the actual bean grinding efficiency, the working state of the grinder can be more accurately reflected, and the adaptability of the powder amount adjustment can be improved.

In one embodiment, the compensation time is adjusted based on the working load of the grinder, wherein the compensation time decreases as the working load of the grinder increases.

During the implementation, the compensation time is determined based on the reliable deviation value. The system corrects the compensation time according to the working load of the grinder; of course, after the preliminary compensation time Tn is calculated using the aforementioned formula Tn = OFn/(α*e), the system corrects the compensation time according to the working load of the grinder. By dynamically adjusting the compensation time, the performance change of the grinder under different working states can be adapted, and the stability of the powder amount control can be improved.

When the increase in the grinder working load is detected, to prevent excessive adjustment or oscillation of the system caused by increased internal temperature, blade disc heating, and bean grinding efficiency change due to continuous high-load operation, the system will appropriately reduce the calculated compensation time. As such, as the grinder's working load increases, the determined compensation time presents a decreasing trend, because under the high-load condition, the grinder itself may have already caused reduced powder output efficiency due to heating and another reason, and if the compensation continues according to the original compensation time, the compensation may lead to excessive powder amount. The compensation for the actual working state of the grinder is made more precise, effectively maintaining the powder output amount of the next cup of coffee always close to the preset standard powder amount, and ensuring consistency of the coffee quality.

Meanwhile, to address the performance of the grinder under a low-load condition, the system adopts an opposite strategy when detecting a decrease in the grinder working load, appropriately increasing the compensation time. Because under the low-load condition, the internal temperature of the grinder is relatively low, the blade disc heating situation is less, and the bean grinding efficiency is relatively stable, appropriately increasing the compensation time can ensure that the powder amount will not decrease too much due to the efficient performance of the grinder. The strategy of dynamically adjusting the compensation time according to the grinder's working load not only improves the flexibility of the powder amount control, but also enhances the adaptability of the system to different working states, ensuring that stable coffee powder close to the preset standard powder amount can be obtained under various circumstances, thereby guaranteeing consistency and stability of the coffee quality.

In one embodiment, referring to Fig. 6, Step 233, determining the compensation time based on the reliable deviation value, includes:
Step 235, determining whether the reliable deviation value falls within a preset dead zone range;
Step 236, when the reliable deviation value falls within the preset dead zone range, setting the compensation time to 0; and
Step 237, when the reliable deviation value does not fall within the preset dead zone range, calculating the compensation time based on the reliable deviation value.

Setting the dead zone range can avoid frequent adjustment caused by a minor deviation, reduce system oscillation, and improve control stability.

The implementation of Steps 235 to 237 ensures that the adjustment of the compensation time by the system is more precise and efficient. When the reliable deviation value falls within the preset dead zone range, the deviation between the current powder amount and the preset standard powder amount is extremely small and almost negligible, therefore no compensation adjustment is needed, and setting the compensation time to 0 can avoid unnecessary operation and reduce waste of the system resource. When the reliable deviation value exceeds the dead zone range, the corresponding compensation time is calculated through a certain algorithm based on the magnitude and direction of the deviation, to ensure that the powder output amount of the next cup of coffee can be quickly and accurately adjusted to a level close to the preset standard powder amount.

In the embodiment, the system first compares the reliable deviation value OFn calculated through the aforementioned step with the preset dead zone range, and the preset dead zone range is usually determined according to a minimum adjustment resolution of the system, i.e., a minimum powder amount adjustment that the system can achieve. When the reliable deviation value OFn falls within the dead zone range, to avoid frequent system adjustment or oscillation caused by a minor deviation, the compensation time Tn is determined as 0 (i.e., no adjustment is made); when the reliable deviation value OFn does not fall within the preset dead zone range, the compensation time is calculated based on the OFn according to the predetermined formula, thereby realizing effective correction of the subsequent powder amount and ensuring that the coffee machine powder output amount is stable and approaches the preset standard powder amount.

In one embodiment, the dead zone range is determined based on a maximum dead zone value and a minimum dead zone value, wherein the maximum dead zone value and the minimum dead zone value are equal in absolute value. In the embodiment, the system presets a positive maximum dead zone value and a negative minimum dead zone value, with the equal absolute value. By setting the reasonable dead zone range, frequent adjustment caused by the system resolution limitation is avoided.

The dead zone range is set, for example, as -2 to +2, forming a symmetric dead zone range. When the reliable deviation value calculated through the aforementioned step falls within the dead zone range, the compensation time Tn is determined as 0, thereby avoiding frequent adjustment or system oscillation caused by a minor deviation and realizing precise control of the powder amount correction. Setting the symmetric dead zone range is to ensure that the system has the same adjustment threshold when the powder amount is excessive or insufficient.

In one embodiment, acquiring buffer data specifically includes: acquiring motor operating steps when a brewing device reaches a target position; and determining each data of the buffer data based on the motor operating steps.

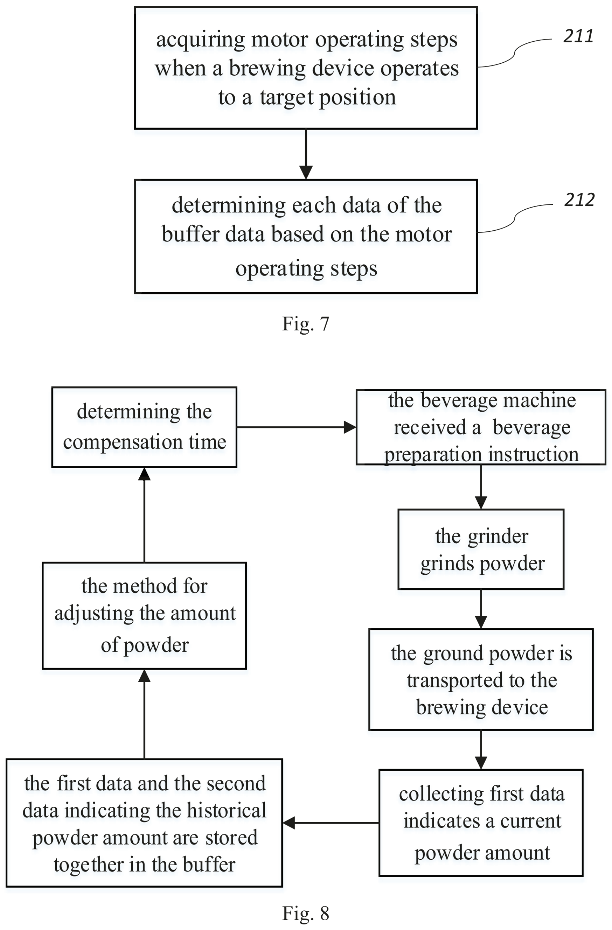

In the embodiment, referring to Fig. 7, Step 210, acquiring buffer data, includes:
Step 211, acquiring motor operating steps when a brewing device reaches a target position; and
Step 212, determining each data of the buffer data based on the motor operating steps.

When the brewing device of the beverage machine reaches the target position, the corresponding coordinate data is acquired by detecting motor operating steps, and the coordinate data has a direct corresponding relationship with the powder amount, thus can be stored and used as buffer data. The motor operating steps serve as feedback information, and are mapped to the powder amount data through a preset conversion relationship (for example, determined through the experiment that every 100 steps of the motor operation corresponds to 1 gram of the powder), and are stored in buffer according to the time sequence of data collection for the subsequent weight allocation and the deviation calculation, thereby providing a reliable basis for realizing the precise powder amount adjustment. And the target position is a powder pressing position after a powder pressing action is completed.

The coordinate value indicated by the motor operating steps serves as the coordinate data for collecting the brewing device feedback to obtain the buffer data. The coordinate value has a clear corresponding relationship with the powder amount. More motor operating steps indicate a greater moving distance of the brewing device, corresponding to less powder amount being pressed, and vice versa. The target powder amount required for each cup of beverage is determined through the preset standard data.

The above method for adjusting the amount of powder can be applied to a coffee machine to adjust the coffee powder amount, solve the problem of unstable powder output amount of the coffee machine, and ensure that the coffee machine powder output amount is maintained within a target value range, thereby improving consistency of the coffee quality.

The present application further provides a beverage machine, wherein the beverage machine includes a memory and a processor, the memory is configured to store computer program capable of running on the processor, and the processor is configured to, when running the computer program, execute the method for adjusting the amount of powder according to any of the aforementioned embodiments.

Referring to the working process of the beverage machine shown in Fig. 8, after a beverage preparation instruction is received, the grinder grinds powder, the ground powder is transported to the brewing device, and during the operation of the brewing device, the first data indicating the current powder amount is collected, and the first data and the second data indicating the historical powder amount are stored together in the buffer. The processor calls the above method for adjusting the amount of powder and executes the method, thereby directly or indirectly feeding back a final compensation time to the next beverage preparation process to adjust operating parameters of the grinder.

Through the above construction, the beverage machine can realize a closed-loop dynamic adjustment of the coffee machine powder amount, effectively compensate for the powder amount offset caused by machine wear, high-load operation, or environmental changes, ensure that the powder amount of each cup of beverage is stable and approaches the preset standard powder amount, thereby improving consistency of the beverage quality and the overall operating performance of the equipment.

In the embodiment, the computer program causes the processor to execute acquiring buffer data, calculating each data deviation according to the preset standard data and the respective weight values, and using the above formula $WOFn = {\sum }_{k = 1}^{n} \left(ΔOFk*Wk\right)$ to determine the weighted deviation data, then determining the data reliability based on the normal distribution characteristic of the weighted deviation data, and using the above formula OFn = WOFn*Cn to calculate the reliable deviation value.

Wherein the processor calculates the compensation time according to Tn = OFn/(α*e) based on the reliable deviation value, the conversion coefficient α corresponding to the standard data and the powder weight, and the actual bean grinding efficiency e of the grinder, and adjusts the operating parameters of the grinder according to the compensation time, such as the working duration, the output powder amount, or the grinding degree, thereby precisely correcting the subsequent powder amount.

In addition, the beverage machine further includes a module for collecting motor operating steps when the brewing device reaches the target position, and the motor operating steps serve as feedback information mapped to the powder amount data and stored in the buffer in the first-in-first-out manner, ensuring timeliness and representativeness of the data and providing a reliable basis for the entire powder amount adjustment process.

Exemplarily, taking coffee preparation as an example, using 1,000g of gold standard coffee bean to continuously make 24g coffee, comparing and observing the situation of coffee cup quantity made without using the above method for adjusting the amount of powder and with using the above method for adjusting the amount of powder, it can be seen that without using the above method for adjusting the amount of powder, 37 cups were made; when using the above method for adjusting the amount of powder, 40 cups were made. When using the above method for adjusting the amount of powder, 1,000g of the gold standard coffee bean can make 3 more cups of the 24g coffee.

From a result, it can be seen that in a continuous production scenario, as the grinder heats up, the bean grinding efficiency will become higher, and the powder output amount per unit time will increase. Using the above method for adjusting the amount of powder can ensure that the coffee powder weight always remains within the standard range under the continuous cup condition, and can also save about 7% of coffee bean, thereby saving cost for the user.

The beverage machine in the present application, by adopting the above method for adjusting the amount of powder, introduces the data weighting, the reliability assessment, and the dead zone control mechanism, effectively overcomes the powder amount instability problem caused by parameter drift and various interference factors in a traditional control method based on a fixed parameter interval, and realizes a closed-loop feedback adjustment; in addition, the method simplifies the data collection and the processing process, making the adjustment process more flexible and efficient, significantly improving the powder output accuracy and the production efficiency of the beverage machine, while reducing energy consumption and waste of the beverage raw material.

It should be understood that although the present description is described according to an embodiment, not every embodiment contains only one independent technical solution. A narrative method of description is only for clarity. Those skilled in the art should regard the description as a whole, and a technical solution in each embodiment may also be appropriately combined to form another embodiment that can be understood by those skilled in the art.

A series of detailed descriptions listed above are only specific descriptions of a feasible embodiment of the present application, and are not intended to limit the protection scope of the present application. Any equivalent embodiment or a change made without departing from the technical spirit of the present application should be included within the protection scope of the present application.

## Claims

1. A method for adjusting the amount of powder, **characterized in that**, the method comprises the following steps:
acquiring buffer data, wherein the buffer data comprises first data and at least one second data, the first data indicates a current powder amount, the second data indicates a historical powder amount, and the second data and the first data are collected in time sequence;
determining weighted deviation data based on the buffer data, respective standard data corresponding to each data within the buffer data, and respective weight values corresponding to each data within the buffer data, wherein the weight value corresponding to the first data is greater than the weight value corresponding to the second data; and
correcting a subsequent powder amount based on the weighted deviation data.

2. The method for adjusting the amount of powder according to claim 1, wherein the determining weighted deviation data based on the buffer data, respective standard data corresponding to each data within the buffer data, and respective weight values corresponding to each data within the buffer data comprises:
acquiring the respective standard data corresponding to each data within the buffer data, and acquiring the respective weight values corresponding to each data within the buffer data;
for each data within the buffer data, calculating a deviation value between said data and a corresponding standard data of said data; and
determining the weighted deviation data based on the deviation values and the weight values.

3. The method for adjusting the amount of powder according to claim 1, wherein the buffer data is stored in a first-in-first-out (FIFO) manner, and the number of the buffer data is a preset fixed value.

4. The method for adjusting the amount of powder according to claim 1, wherein the weighted deviation data is calculated as: $WOFn = {\sum }_{k = 1}^{n} \left(ΔOFk*Wk\right) ;$ where WOFn indicates the weighted deviation data, ΔOFk indicates a deviation value between a kth data within the buffer data and a corresponding standard data, and Wk indicates the weight value corresponding to the kth data within the buffer data.

5. The method for adjusting the amount of powder according to claim 1, wherein the weight values satisfy the following conditions:
the weight values corresponding to each data within the buffer data form an increasing sequence according to a time sequence of data collection, and a sum of the weight value corresponding to the first data and all weight values corresponding to the second data is 1.

6. The method for adjusting the amount of powder according to any one of claims 1 to 5, wherein the correcting the subsequent powder amount based on the weighted deviation data comprises:
calculating a reliable deviation value based on the weighted deviation data and a corresponding data reliability, wherein the data reliability is determined based on the weighted deviation data presenting a normal distribution pattern; and
correcting the subsequent powder amount based on the reliable deviation value.

7. The method for adjusting the amount of powder according to claim 6, wherein the correcting the subsequent powder amount based on the reliable deviation value comprises:
determining a compensation time based on the reliable deviation value; and
adjusting operating parameters of a grinder according to the compensation time to correct the subsequent powder amount, wherein the operating parameters of the grinder comprise at least one of grinding working duration, output powder amount, and grinding degree.

8. The method for adjusting the amount of powder according to claim 6, wherein the determining that the data reliability is based on the weighted deviation data presenting the normal distribution pattern comprises:
the closer the weighted deviation data is to a mathematical expectation of the normal distribution, the higher a corresponding data reliability is.

9. The method for adjusting the amount of powder according to claim 6, wherein the reliable deviation value is calculated as: $OFn = WOFn * Cn ;$ where OFn indicates the reliable deviation value corresponding to the weighted deviation data, WOFn indicates the weighted deviation data, Cn indicates the data reliability, and Cn is a value greater than 0 and less than 1.

10. The method for adjusting the amount of powder according to claim 7, wherein the compensation time is calculated as: $Tn = OFn / \left(α*e\right) ;$ where Tn indicates the compensation time, OFn indicates the reliable deviation value, α indicates a conversion coefficient for the relationship between the standard data and a powder weight, and e indicates an actual bean grinding efficiency of the grinder.

11. The method for adjusting the amount of powder according to claim 8, wherein the compensation time is adjusted based on a working load of the grinder, and wherein the compensation time decreases as the working load of the grinder increases.

12. The method for adjusting the amount of powder according to claim 7, wherein the determining the compensation time based on the reliable deviation value comprises:
determining whether the reliable deviation value falls within a preset dead zone range;
when the reliable deviation value falls within the preset dead zone range, setting the compensation time to 0; and
when the reliable deviation value does not fall within the preset dead zone range, calculating the compensation time based on the reliable deviation value.

13. The method for adjusting the amount of powder according to claim 12, wherein the dead zone range is determined based on a maximum dead zone value and a minimum dead zone value, and wherein the maximum dead zone value and the minimum dead zone value are equal in absolute value.

14. The method for adjusting the amount of powder according to any one of claims 1 to 5, wherein the acquiring buffer data comprises:
acquiring motor operating steps when a brewing device reaches a target position; and
determining each data of the buffer data based on the motor operating steps.

15. A beverage machine, wherein the beverage machine comprises a memory and a processor, the memory is configured to store computer program capable of running on the processor, **characterized in that**, the processor is configured to, when running the computer program, execute the method for adjusting the amount of powder according to any one of claims 1 to 14.
